# EUROPÄISCHE PATENTSCHRIFT

(11) **EP 3 301 070 B1**
(45) Veröffentlichungstag und Bekanntmachung des Hinweises auf die Patenterteilung: **17.03.2021**
(21) Anmeldenummer: 17185097.7
(22) Anmeldetag: 07.08.2017
(51) Int. Cl.: G05B 19/418, B67C 3/00, G05B 23/02

(54) **VORRICHTUNG UND VERFAHREN ZUM ERMITTELN EINES STILLSTANDSVERURSACHERS EINER ANLAGE**
METHOD AND DEVICE FOR DETERMINING THE REASON WHY A SYSTEM IS AT A STANDSTILL
PROCÉDÉ ET DISPOSITIF DE DÉTERMINATION D'UN RESPONSABLE D'ARRÊT D'UNE INSTALLATION

(30) Priorität: 22.09.2016 DE 102016117927
(43) Veröffentlichungstag der Anmeldung: 04.04.2018
(73) Patentinhaber: Hassia Mineralquellen GmbH & Co. KG, 61118 Bad Vilbel (DE)
(72) Erfinder: Schmidt, Herr Michael, 67292 Kirchheimbolanden (DE); Rupp, Herr Gerhard, 93051 Regensburg (DE)
(74) Vertreter: Hannke, Christian

(56) Entgegenhaltungen:
- DE-A1-102011 017 448
- DE-A1-102012 206 082
- JP-A- 2008 097 128
- TROUPIS D ET AL: "Computer integrated monitoring, fault identification and control for a bottling line", INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT, NEW YORK, NY, USA,IEEE, US, Bd. 2, 8. Oktober 1995 (1995-10-08), Seiten 1549-1556, XP010193187, DOI: 10.1109/IAS.1995.530488 ISBN: 978-0-7803-3008-5
- Timo Frankl: "SitePilot Line Diagnostics - proactively informative, intuitively operator-friendly", Krones AG blog, 21. Februar 2016 (2016-02-21), Seiten 1-6, XP55452908, Gefunden im Internet: URL:https://blog.krones.com/blog/technolog y/sitepilot-line-diagnostics-proactively-i nformative-intuitively-operator-friendly/? lang=en [gefunden am 2018-02-21]

## Beschreibung

Die Erfindung betrifft eine Vorrichtung zum Ermitteln eines Stillstandverursachers einer Anlage, insbesondere einer Abfüllanlage, wobei die Anlage mindestens einen wertschöpfenden ersten Anlagenabschnitt, mindestens einen dem ersten Anlagenabschnitt vorgeschalteten zweiten Anlagenabschnitt und mindestens einen dem ersten Anlagenabschnitt nachgeschalteten dritten Anlagenabschnitt aufweist, wobei für jeden Anlagenabschnitt durch eine Sensoreinheit der Vorrichtung, ausgehend von einem zu dem jeweiligen Anlagenabschnitt gehörenden Stromsignal, Werte einer aufgenommenen Leistung bestimmbar sind.

Aus dem Stand der Technik sind derartige Anlagen bekannt und es ist von besonderer Bedeutung, die Anlage möglichst effizient betreiben zu können. Es ist daher von besonderem Interesse, die Stillstandzeiten der Anlage zu minimieren, insbesondere die Stillstandzeiten des Teils der Anlage zu minimieren, welche im Wesentlichen den wertschöpfenden Arbeitsschritt ausführt. Im Bereich von Abfüllanlagen ist dies der Flaschenfüller oder auch Füller. Die Produktivität der gesamten Anlage ist proportional zu der Produktivität des wertschöpfenden Teils der Anlage. Ein Ausfall der wertschöpfenden Maschine kann hierbei vielerlei Gründe haben, beispielsweise im Fall des Füllers einer Abfüllanlage durch einen Mangel an Leergut, an Eigenstörungen, an einem Stau durch nicht abtransportierte gefüllte Flaschen und dergleichen.

Bisher können Stillstände der wertschöpfenden Maschine nur sehr aufwändig ergründet werden, beispielsweise durch Auslesen von Fehlerprotokollen der einzelnen Anlagenabschnitte oder durch visuelles Erkennen von Problemen der Anlagenabschnitte an sich

Die Druckschrift DE 10 2011 017448 offenbart ein bekanntes Verfahren zum Betreiben einer Behältnisbehandlungsanlage mit einer Störungsdiagnose, welche auf der Erfassung und dem Vergleich von Referenzkennwerten der einzelnen Behandlungsvorrichtungen beruht.

Es ist daher Aufgabe der vorliegenden Erfindung, Stillstände, insbesondere Stillstände von kurzer Dauer, einer wertschöpfenden Maschine automatisiert zu ergründen, um so die produktive und energetische Effizienz der Anlage steigern zu können.

Diese Aufgabe wird einerseits gelöst von einer Vorrichtung gemäß Anspruch 1 und einem Verfahren gemäß Anspruch 7.

Erfindungsgemäß wird eine Vorrichtung zum Ermitteln eines Stillstandverursachers einer Anlage, insbesondere einer Abfüllanlage, bereitgestellt, wobei die Anlage mindestens einen wertschöpfenden ersten Anlagenabschnitt, mindestens einen dem ersten Anlagenabschnitt vorgeschalteten zweiten Anlagenabschnitt und mindestens einen dem ersten Anlagenabschnitt nachgeschalteten dritten Anlagenabschnitt aufweist, wobei für jeden Anlagenabschnitt durch eine Sensoreinheit der Vorrichtung, ausgehend von einem zu dem jeweiligen Anlagenabschnitt gehörenden Stromsignal, Werte einer aufgenommenen Leistung bestimmbar sind, für jeden Anlagenabschnitt die jeweiligen Werte der aufgenommenen Leistung mit einem jeweiligen bestimmbaren spezifischen Vergleichswert durch eine Vergleichseinheit der Vorrichtung vergleichbar sind und ein Stillstand des jeweiligen Anlagenabschnitts vorliegt, wenn zu einem Zeitpunkt T der Wert der aufgenommenen Leistung kleiner als der Vergleichswert ist, wobei ausgehend von einem Stillstand des ersten Anlagenabschnitts, welcher länger als eine vordefinierbare Zeitdauer andauert, unter Verwendung der Werte der aufgenommenen Leistung der Anlagenabschnitte ein Stillstandverursacher ausgewählt aus den Anlagenabschnitten durch eine Ermittlungseinheit der Vorrichtung ermittelbar ist.

Ein Stillstandverursacher kann erfindungsgemäß im wertschöpfenden ersten Anlagenabschnitt, im zweiten oder im dritten Anlagenabschnitt angeordnet sein. Als ein Stillstandverursacher wird hierbei der Abschnitt der Anlage bezeichnet, welcher ursächlich ist für den Stillstand des wertschöpfenden Abschnittes der Anlage. Dies können der wertschöpfende Abschnitt selbst, vorgelagerte oder nachgelagerte Abschnitte der Anlage sein. Beim Beispiel der Abfüllanlage kann beispielsweise der Füller selbst defekt sein oder die Etikettiermaschine, welche dem Füller nachgeschaltet ist oder die Reinigungsmaschine, welche dem Füller vorgeschalten ist.

Ist der Wert der aufgenommenen Leistung hingegen größer als der Vergleichswert, so arbeitet der jeweilige Anlagenabschnitt und befindet sich in einem Zustand PRODUKTIV.

Weiter wird Zeitpunkt T durch die Ermittlungseinheit ermittelt, indem die Werte der aufgenommenen Leistung des ersten Anlagenabschnitts untersucht werden und der Zeitpunkt ermittelt ist, wenn der Wert der aufgenommenen Leistung des ersten Anlagenabschnitts kleiner ist als der jeweilige spezifische Vergleichswert.

Unter einem spezifischen Vergleichswert ist hierbei ein Wert zu verstehen, welcher sich abhängig vom betrachteten Anlagenabschnitt bzw. Elementen des Anlagenabschnitts im Vergleich zu anderen Anlagenabschnitten bzw. Elementen daraus unterscheiden kann.

Gemäß der bevorzugten Ausführungsform ist der Vergleichswert durch eine Bestimmungseinheit der Vorrichtung automatisch bestimmbar durch ein Finden eines lokalen Minimums der Werte der aufgenommenen Leistung in einem störungsfreien Betriebszustand, und Setzen dieses Minimums als den Vergleichswert.

Hierbei ist unter einem störungsfreien Betriebszustand zu verstehen, dass die Maschine nicht durch innere oder äußere Faktoren in ihrer Funktionsweise gestört oder beeinflusst wird.

Nur beispielsweise kann der Vergleichswert auch manuell, beispielsweise durch einen Arbeiter, gesetzt werden. Weiter alternativ ist es denkbar, dass die Bestimmungseinheit den Vergleichswert findet und setzt, jedoch der Vergleichswert noch zusätzlich manuell justiert werden kann.

Die vordefinierbare Zeitdauer oder auch Zeitdauer ist ein Zeitabschnitt, welcher den Stillstand des ersten Anlagenabschnitts als Startpunkt und einen bestimmten Zeitwert als Endpunkt aufweist. Nach dem Stillstand des ersten Anlagenabschnitts startet demnach die Zeitdauer und endet an dem bestimmten Zeitwert, d.h. dem Endpunkt. Dauert der Stillstand des ersten Anlagenabschnitts länger als diese Zeitdauer, so wird ein Stillstandsverursacher gemäß vorliegender Erfindung ermittelt. Gemäß einer weiteren bevorzugten Ausführungsform beträgt die Zeitdauer höchstens drei Minuten, bevorzugter höchstens zwei Minuten und besonders bevorzugt höchstens eine Minute. Das heißt, dass beispielsweise nach einem Stillstand des ersten Anlagenabschnitts von einer Minute, welcher der Zeitdauer entspricht, der Stillstandsverursacher ermittelt wird. Anders gesagt wird ein Stillstandsverursacher ermittelt, wenn der Stillstand des ersten Anlagenabschnitts länger andauert als die Zeitdauer. Die Zeitdauer ist vorzugsweise in der Vorrichtung hinterlegt und kann manuell geändert werden.

Kurzzeitige Stillstände des ersten Anlagenabschnittes können unbeachtet bleiben, welche meist von geringfügigen Störungen der Anlage herrühren und keinen längeren Stillstand des ersten Anlagenabschnittes verursachen. Längere Stillstände und deren Stillstandverursacher sollen jedoch durch die Ermittlungseinheit ermittelt werden, um langwierige Stillstände der Anlage vermeiden zu können, indem sie schnell durch die Vorrichtung erkannt werden.

Gemäß der bevorzugten Ausführungsform ist nach der Zeitdauer des Stillstands des ersten Anlagenabschnitts durch die Ermittlungseinheit mindestens ein erster von der Leistungsaufnahme der Anlagenabschnitte abhängiger Wert bestimmbar. Dieser erste Wert oder die ersten Werte bilden einen Satz von ersten Werten, wobei aufgrund einer Höhe des ersten Wertes oder der ersten Werte des Satzes von ersten Werten ein Anlagenabschnitt dem Satz von ersten Werten durch die Ermittlungseinrichtung zuweisbar ist.

Erfindungsgemäß wird eine Vielzahl von ersten Werten bestimmt, welche entsprechend den Satz von ersten Werten bilden. Beispiele für bestimmbare Werte sind die Folgenden:
- Welche der Anlagenabschnitte waren in einem Zeitabstand vor dem Stillstand des ersten Anlagenabschnittes in einem Stillstand? Der Wert hierzu ist jeweils ein binärer Wert.
- Welcher der Anlagenabschnitte war in einem Zeitabstand vor dem Stillstand zuerst in einem Stillstand? Ebenso ist der Wert jeweils ein binärer Wert.
- Prozentualer Anteil der Zeit in einem Zeitabstand vor dem Stillstand, in der der jeweilige Anlagenabschnitt im Status PRODUKTIV war. Der Wertebereich dieses Wertes ist [0,1].
- Prozentualer Anteil der Zeit in einem Zeitabstand nach dem Stillstand, in der der jeweilige Anlagenabschnitt im Status PRODUKTIV war. Der Wertebereich dieses Wertes ist [0,1].
- Welcher der Anlagenabschnitte wechselte nach dem Stillstand für einen kurzen Zeitraum in den Status PRODUKTIV? Dieser Wert ist ein binärer Wert.

Natürlich sind auch noch weitere oder andere Werte denkbar. Abhängig von den ermittelten Werten wird diesem Satz von Werten ein Anlagenabschnitt zugeordnet, also der erste, der zweite oder der dritte Anlagenabschnitt. Dadurch kann erkannt werden, in welchem Bereich der Anlage die Fehlfunktion aufgetreten ist.

Gemäß der bevorzugten Ausführungsform weist der zweite Anlagenabschnitt n' Anlagenabschnittselemente nᵢ mit i=1,...,n' und der dritte Anlagenabschnitt m' Anlagenabschnittselemente mᵢ mit i=1,...,m' auf, wobei das Element n₁ direkt dem ersten Anlagenabschnitt und das Element nᵢ₊₁ direkt dem Element nᵢ vorgelagert ist und das Element m₁ direkt dem ersten Anlagenabschnitt und das Element mᵢ₊₁ direkt dem Element mᵢ nachgelagert ist, wobei nach Zuweisung des zweiten Anlagenabschnitts oder des dritten Anlagenabschnitts zu dem Satz von ersten Werten in Abhängigkeit durch die Ermittlungseinheit mindestens ein (i+1)-ter, beginnend mit i=1, von der Leistungsaufnahme von dem Anlagenabschnittselementen nᵢ und nᵢ₊₁ des zweiten Anlagenabschnitts oder mᵢ und mᵢ₊₁ des dritten Anlagenabschnitts den Abschnittselementen abhängiger Satz von (i+1)-ten Werten mit (i+1)-ten Werten bestimmbar ist und unter Berücksichtigung der (i+1)-ten Werte und insbesondere der Höhe der (i+1)-ten Werte durch die Ermittlungseinheit der Stillstandverursacher ermittelbar ist, wobei bei Ermittlung des Anlagenabschnittelements nᵢ₊₁ ein Vergleich mit dessen direkt vorgelagerten Anlagenabschnittelements nᵢ₊₂ oder bei Ermittlung des Anlagenabschnittelements mᵢ₊₁ ein Vergleich mit dessen direkt nachgelagerten Anlagenabschnittelements mᵢ₊₂ durchführbar ist.

Wurde also von der Ermittlungseinrichtung erkannt, dass der Stillstandverursacher dem zweiten oder dritten Anlagenabschnitt zuzuordnen ist, so wird einer Entscheidungsabfolge gefolgt, welche den tatsächlichen Stillstandverursacher aus einer Menge von Anlagenabschnittselementen herausfiltert.

Am Beispiel einer Abfüllanlage sind Anlagenabschnittselemente des zweiten Anlagenabschnitts, welcher dem ersten Anlagenabschnitt vorgeschaltet ist, beispielsweise eine Reinigungsmaschine zum Reinigen der Flaschen, eine Abschraubmaschine zum Abschrauben des Verschlusses der Flaschen, ein Auspacker zum Auspacken der Flaschen und ein Entlader zum Entladen der Flaschen. Dabei ist die Reinigungsmaschine direkt dem ersten Anlagenabschnitt, die Abschraubmaschine direkt der Reinigungsmaschine der Auspacker direkt der Abschraubmaschine und der Entlader direkt dem Auspacker vorgeschalten. Die Reinigungsmaschine entspricht in diesem Beispiel dem Element n₁, die Abschraubmaschine dem Element n2, der Auspacker dem Element n₃ und der Entlader dem Element n₄.

Zunächst wird daher ein Vergleich zwischen der Reinigungsmaschine und der Abschraubmaschine durchgeführt. Hierfür ermittelt die Ermittlungseinheit zweite Werte und enstprechend einen Satz von zweiten Werten und entscheidet anhand der zweiten Werte, insbesondere anhand der Höhe der zweiten Werte, ob die Reinigungsmaschine oder die Abschraubmaschine ursächlich für den Stillstand des ersten Anlagenabschnittes ist. Wird entsprechend erkannt, dass die Reinigungsmaschine der Stillstandverursacher ist, so endet die Untersuchung. Wird jedoch erkannt, dass die Abschraubmaschine der Stillstandverursacher ist, so muss eine weitere Untersuchung mit der der Abschraubmaschine vorgelagerten Maschine durchgeführt werden, da ein Stillstand der Abschraubmaschine sowohl von der Abschraubmaschine als auch von der der Abschraubmaschine vorgelagerten Maschine herrühren kann. Für den Vergleich der Abschraubmaschine und dem Auspacker, welcher der Abschraubmaschine direkt vorgelagert ist, werden entsprechend dritte Werte und ein Satz von dritten Werten ermittelt, mittels welcher durch die Ermittlungseinheit ermittelt werden kann, welche Maschine den Stillstand verursacht hat. Diese Methodik wird solange weitergeführt, bis der tatsächliche Stillstandverursacher durch die Ermittlungseinheit ermittelt worden ist.

Analog ist diese Methodik auf die Anlagenabschnittselemente, welche dem ersten Anlagenabschnitt nachgeschaltet sind, anwendbar.

Natürlich ist die Vorrichtung zum Ermitteln eines Stillstandverursachers einer Anlage für nahezu beliebige Anlagentypen nutzbar, beispielsweise Fertigungsanlagen von Automobilen, in der Lebensmittelindustrie etc. Ermittelt die Ermittlungseinheit jedoch den ersten Anlagenabschnitt, so verhält es sich im Gegensatz zu dem zweiten und dritten Anlagenabschnitt etwas anders.

Gemäß der bevorzugten Ausführungsform, welche sich auf die Ermittlung des ersten Anlagenabschnittes durch die Ermittlungseinheit bezieht, weist der erste Anlagenabschnitt k' zueinander korrelierte Anlagenabschnittselemente kᵢ mit i=1,...,k' mit einem Korrelationswert von mindestens 0,8 zu dem wertschöpfenden Anlagenabschnittelement auf, wobei das Element k2 direkt dem wertschöpfenden Anlagenabschnittselement k₁ und das Element kᵢ₊₁ direkt dem Element kᵢ vorgelagert ist, wobei nach Zuweisung des ersten Anlagenabschnittes zu dem ersten Wert in Abhängigkeit durch die Ermittlungseinheit mindestens ein (i+1)-ter, beginnend mit i=1, von der Leistungsaufnahme von dem Anlagenabschnittselementen kᵢ und kᵢ₊₁ des zugewiesenen Anlagenabschnitts abhängiger Satz von (i+1 )-ten Werten mit (i+1)-ten Werten bestimmbar ist und unter Berücksichtigung der (i+1)-ten Werte, insbesondere anhand der Höhe der (i+1)-ten Werte, durch die Ermittlungseinheit der Stillstandverursacher ermittelbar ist, wobei bei Ermittlung des Anlagenabschnittelements kᵢ₊₁ ein Vergleich mit dessen direkt vorgelagerten Anlagenabschnittelements durchführbar ist.

Wiederum anhand des Beispiels der Abfüllanlage erklärt ist das wertschöpfende Anlagenabschnittselement k₁ der Füller bzw. die Füllmaschine. Ein mit dem ersten Anlagenabschnittselement k₁ stark korreliertes Anlagenabschnittselement, welches dem Füller vorgelagert ist, ist ein sogenannter Inspektor, welcher beispielsweise kontrolliert, ob es sich um Fremdbehälter handelt, sich in der Flasche Restflüssigkeit befindet, die Art der Flasche (Glas oder Plastik) erkennt oder ob die Flasche beschädigt ist.

Die Kontrolle der Flaschen durch den Inspektor ist stark mit dem Abfüllen der Flaschen durch den Füller korreliert. Stark korreliert bedeutet hierbei, dass bei einem Stillstand des Füllers nahezu zeitgleich oder in einem geringen Zeitabstand ebenso die stark korrelierten Maschinen einen Stillstand aufweisen. Üblicherweise weist der erste Anlagenabschnitt im Beispiel der Abfüllanlage lediglich den Füller und den Inspektor auf.

Es ist ebenso denkbar, dass ein oder mehrere mit dem wertschöpfenden Anlagenabschnittselement k₁ stark korrelierte Anlagenabschnittselemente dem Element k₁ nachgelagert sind.

Die Ermittlung des Stillstandverursachers innerhalb des ersten Anlagenabschnitts ist ähnlich zu der zuvor beschriebenen Ermittlung des Stillstandverursachers im zweiten bzw. dritten Anlagenabschnitt. Allerdings wird beim ersten Anlagenabschnitt nicht mit einem dem wertschöpfenden Anlagenabschnitt vorgelagerten Anlagenabschnittelement begonnen, sondern direkt mit einem Vergleich zwischen dem wertschöpfenden Anlagenabschnittelement mit dessen vorgelagerten bzw. nachgelagerten Anlagenabschnittelementen.

Im Beispiel der Abfüllanlage wird entsprechend lediglich nur ein Vergleich zwischen dem Füller und dem Inspektor, welcher dem Füller vorgeschaltet ist, durchgeführt und entsprechend ein Stillstandverursacher durch die Ermittlungseinheit ermittelt.

Eine Ermittlung des Stillstandverursachers kann besonders vorteilhaft gestaltet werden, wenn die Ermittlungseinheit ein supervised-learning-Modul aufweist, wobei das supervised-learning-Modul durch Trainingswerte eine Gesetzmäßigkeit zum Erkennen des Stillstandverursachers erlernt.

Insbesondere kann die Ermittlungseinheit erlernen, ob der Stillstandverursacher dem ersten, zweiten oder dritten Anlagenabschnitt zuzuordnen ist. Hierfür erhält die Ermittlungseinheit Sätze mit ersten Trainingswerten, welchen bereits ein Anlagenabschnitt zugeordnet wurde. Durch das supervised-learning-Modul erkennt die Ermittlungseinheit abhängig von den ersten Trainingswerten und der Zuweisung des Anlagenabschnitts zu diesen Trainingswerten eine Gesetzmäßigkeit zum Erkennen des Stillstandverursachers, insbesondere eine Gesetzmäßigkeit zur Zuweisung des Anlagenabschnitts zu den ersten Werten.

Es ist hierbei notwendig, die Ermittlungseinheit mit ausreichend vielen Datensätzen von Trainingswerten zu trainieren, um eine sichere Zuweisung der Anlagenabschnitte gewährleisten zu können.

Sollte es der Fall sein, dass die Ermittlungseinheit erste Werte einem falschen Anlagenabschnitt zuordnet, so kann diese Zuordnung durch einen Arbeiter manuell korrigiert werden und insbesondere der Ermittlungseinheit als Trainingswerte bereitgestellt werden.

Natürlich wird die Zuweisung eines Anlagenabschnitts mit wachsender Menge an Werten aufgrund des Trainings immer präziser und zuverlässiger.

Gleiches betrifft auch die Entscheidungen nach der Zuweisung des Anlagenabschnitts betreffend den Satz von (i+1)-ten Werten mit (i+1)-ten Werte.

Gemäß einer weiteren bevorzugten Ausführungsform weist die Vorrichtung ein Speicherelement auf. Insbesondere können hierdurch die Werte der aufgenommenen Leistung der jeweiligen Anlagenabschnitte abgespeichert werden. Das Speicherelement weist dabei zumindest eine signaltechnische Verbindung zu der Ermittlungseinheit auf, so dass die Ermittlungseinheit auf die Werte der aufgenommenen Leistung zugreifen kann und daraus die entsprechenden (i+1)-ten Werte und die Sätze der (i+1)-ten Werte ermitteln kann.

Ebenso wird die zugrunde liegende Aufgabe durch ein Verfahren gemäß Anspruch 7 gelöst.

Gemäß einer bevorzugten Ausführungsform beträgt die Zeitdauer des Stillstands des ersten Anlagenabschnitts höchstens 10 Minuten.

Besonders bevorzugt sollen Stillstände untersucht und automatisch erkannt werden, welche mindestens 1 Minute und höchstens 10 Minuten andauern, da ein Großteil von Stillständen bereits nach 1 Minute wieder behoben ist oder nur sehr wenige Stillstände länger als 10 Minuten andauern. Meist ist es der Fall, dass Stillstände, welche länger als 10 Minuten andauern, Stillstände betreffen, die zur Wartung, Überholung, Reparatur oder dergleichen von außerhalb der Anlage hervorgerufen werden.

Durch eine Ermittlung von Stillständen und entsprechend des Stillstandverursachers des ersten Anlagenabschnitts von einer Dauer von mindestens 1 Minute und höchstens von 10 Minuten kann insgesamt die produktive als auch die energetische Effizienz der Anlage gesteigert werden.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit der Zeichnung zu entnehmen. Hierbei zeigen:
- Fig. 1: möglicher Aufbau einer Abfüllanlage;
- Fig. 2: Werte von aufgenommenen Leistungen der Anlagenabschnittelemente;
- Fig. 3: Abfolge zur Ermittlung eines Stillstandverursachers;
- Fig. 4: die Vorrichtung gemäß einer bevorzugten Ausführungsform.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

In den Figuren wird die Erfindung am Beispiel einer Abfüllanlage genauer dargestellt und erläutert.

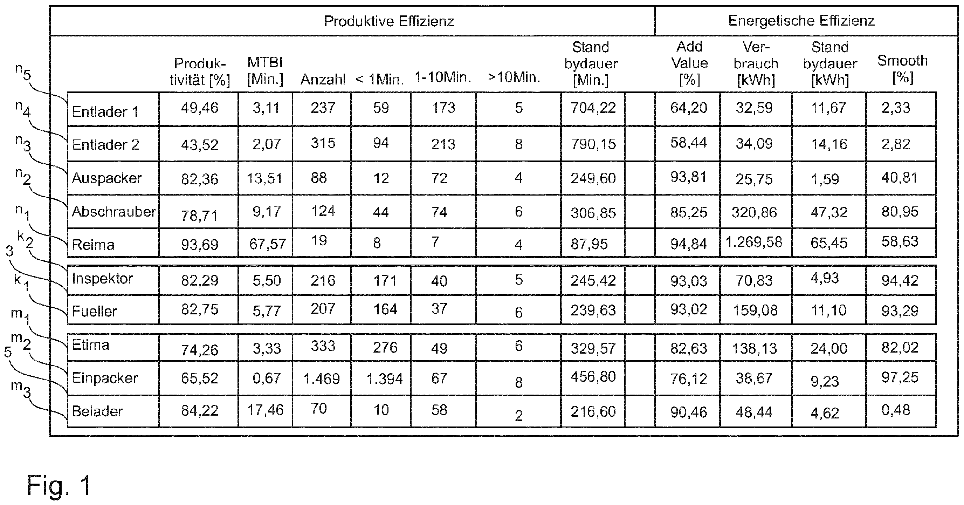

Die Figur 1 zeigt dabei eine mögliche Abfüllanlage 1, welche unterteilt ist in einen ersten Anlagenabschnitt 3, welcher das wertschöpfende Anlagenabschnittelement k₁, vorliegend der Füller, und den mit dem Anlagenabschnittelement k₁ stark korrelierten Anlagenabschnitt k₂, vorliegend der Inspektor, aufweist.

Dem ersten Anlagenabschnitt 3 ist ein zweiter Anlagenabschnitt 4 vorgeschaltet, welcher vorliegend die Reinigungsmaschine n₁, die Abschraubmaschine n₂, den Auspacker n₃ und einen zweiten Entlader n₄ und einen ersten Entlader n₅ aufweist, wobei die Reinigungsmaschine n₁ direkt dem ersten Anlagenabschnitt 3, die Abschraubmaschine n₂ direkt der Reinigungsmaschine n₁, der Auspacker n₃ direkt der Abschraubmaschine n₂, der zweite Entlader n₄ direkt dem Auspacker n₃ und der erste Entlader n₅ direkt dem zweiten Entlader n₄ vorgeschaltet sind.

In der Figur 1 beschreibt dabei Produktivität den prozentualen Anteil der Zeit im Zustand PRODUKTIV innerhalb eines Beobachtungszeitraums, vorliegend 24 Stunden, MTBI (mean time between interrupt) die mittlere Zeit zwischen zwei aufeinanderfolgenden Stillständen, Anzahl die Gesamtzahl der Stillstände innerhalb des Beobachtungszeitraums, AddValue den prozentualen Anteil der produktiv eingesetzten Energie am Gesamtverbrauch innerhalb des Beobachtungszeitraums und Smooth den prozentualen Anteil der produktiven Zeit, in welcher die Maschine störungsfrei läuft.

Wie zu erkennen ist, ist ein Großteil der Stillstände bereits nach weniger als 1 Minute wieder behoben, wohingegen nur ein sehr kleiner Anteil an Stillständen länger als 10 Minuten andauert. Es ist daher von besonderem Interesse, die Stillstände, welche länger als 1 Minute und weniger als 10 Minuten andauern, genauer zu beleuchten.

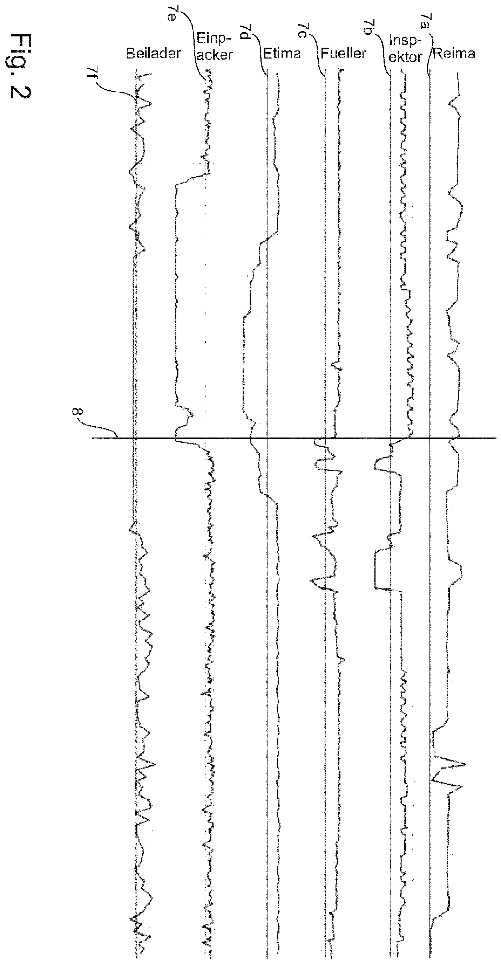

In der Figur 2 sind Werte der aufgenommenen Leistung von ausgewählten Anlagenabschnittselementen gegenüber der Zeit aufgetragen.

Wie zu erkennen ist, ist in jedem Leistungsdiagramm der jeweilige spezifische Vergleichswert 7a-7f eingezeichnet. Liegen die Werte der aufgenommenen Leistung der jeweiligen Maschine unterhalb des jeweiligen Vergleichswerts 7a-7f, so liegt ein Stillstand der jeweiligen Maschine vor, liegen die Werte der aufgenommenen Leistung oberhalb des Vergleichswerts 7a-7f, so befindet sich die jeweilige Maschine im Zustand PRODUKTIV.

Durch die Ermittlungseinheit 9 (hier nicht gezeigt) ist ein Zeitpunkt T 8 bestimmt worden, durch welchen angezeigt wird, wann der erste Anlagenabschnitt 3 und insbesondere das wertschöpfende Anlagenabschnittselement k₁, vorliegend der Füller, einen Stillstand aufweist.

Aus dem Vergleich der Leistungsdiagramme der jeweiligen Anlagenabschnittselemente ist erkennbar, dass vor dem Stillstand des Füllers ein Stillstand der Etikettiermaschine vorgelegen hat, jedoch ist erkennbar, dass bereits vor dem Stillstand der Etikettiermaschine der Einpacker einen Stillstand aufweist. Weiter ist zu erkennen, dass der Inspektor stark mit dem Füller korreliert ist, so dass der Verlauf des Leistungsdiagramms des Inspektors sehr ähnlich ist zum Verlauf des Leistungsdiagramms des Füllers.

Durch die Ermittlungseinheit 9 ist ermittelbar, zu welchem Anlagenabschnitt 3, 4, 5 der Stillstandverursacher zuweisbar ist.

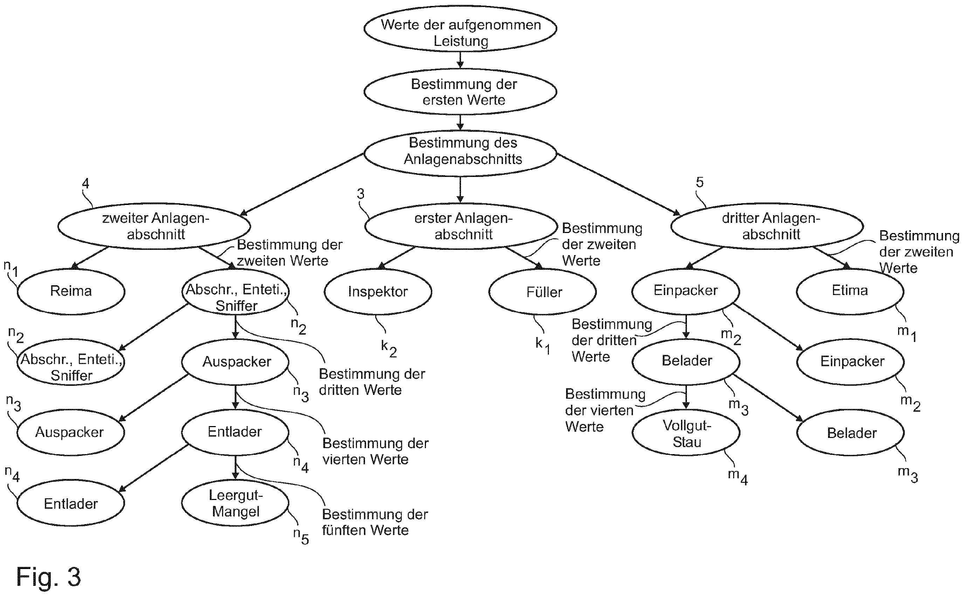

Ein mögliches Verfahren zum Ermitteln des Stillstandverursachers ist in der Figur 3 beschrieben.

Zunächst wird mittels der Werte der aufgenommenen Leistung der jeweiligen Maschine durch die Ermittlungseinheit 9 ein Stillstand des ersten Anlagenabschnittes 3 festgestellt. Nach Feststellung des Stillstands des ersten Anlagenabschnittes 3 werden erste Werte bestimmt, mittels welcher die Ermittlungseinheit 9 denjenigen Anlagenabschnitt 3, 4, 5 ermittelt, in welchem der Stillstandverursacher angeordnet ist.

Wurde durch die Ermittlungseinheit 9 der erste Anlagenabschnitt 3 ermittelt, so werden im Anschluss zweite Werte ermittelt und durch die Ermittlungseinheit 9 festgestellt, ob der Stillstandverursacher der Füller selbst oder der stark mit dem Füller korrelierte Inspektor ist. Wurde jedoch durch die Ermittlungseinheit 9 der zweite Anlagenabschnitt 4 ermittelt, welcher dem ersten Anlagenabschnitt 3 vorgelagert ist, so wird zunächst das direkt dem ersten Anlagenabschnitt 3 vorgelagerte Anlagenabschnittelement n₁, vorliegend die Reinigungsmaschine, mit dessen direkt vorgelagerten Anlagenabschnittelement n₂ verglichen und durch Bestimmung von zweiten Werten durch die Ermittlungseinheit 9 bestimmt, welches Anlagenabschnittelement n₁, n₂ für den Stillstand des ersten Anlagenabschnitts 3 verantwortlich ist. Wird durch die Ermittlungseinheit 9 ermittelt, dass es sich um das Element n₁ handelt, so ist der Suchalgorithmus bereits am Ende. Wird jedoch festgestellt, dass Element n₂ Stillstandverursacher ist, so muss ermittelt werden, ob es das Element n₂ selbst ist oder einer dem Element n2 vorgeschaltetes Element n₃. Hierbei werden dritte Werte ermittelt, mittels welchen eine Entscheidung durch die Ermittlungseinheit 9 getroffen wird.

Eine analoge Vorgehensweise ist dem dritten Anlagenabschnitt 5 zugeordnet.

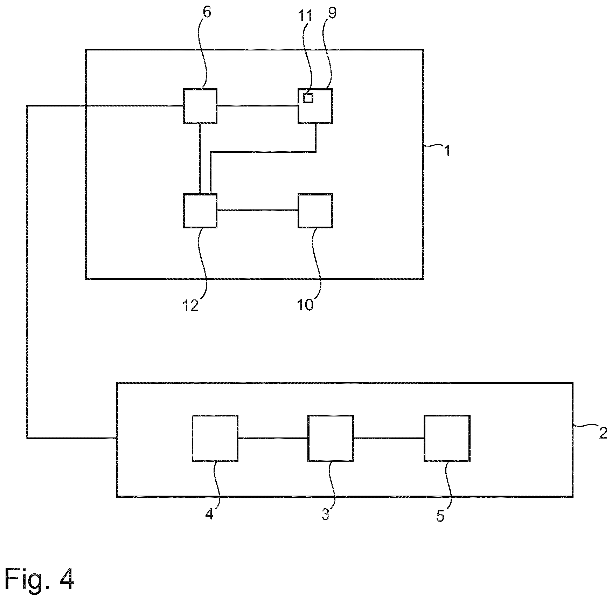

Die Figur 4 zeigt noch eine Vorrichtung 1 gemäß einer besonders bevorzugten Ausführungsform. Die Vorrichtung 1 umfasst hierbei eine Sensoreinheit 6, ein Speicherelement 12, eine Bestimmungseinheit 10 und eine Ermittlungseinheit 9, welche ein supervised-learning-Modul 11 aufweist.

Die signaltechnische Verbindung zwischen den jeweiligen Bauteilen ist in der Figur 4 dargestellt. Insbesondere ist die Sensoreinheit 6 signaltechnisch mit der Anlage 2, insbesondere jedem Anlagenabschnitt 3, 4, 5 und weiter insbesondere mit jedem Anlagenabschnittelement n₁, mᵢ und kᵢ verbunden.

Sämtliche in den Anmeldungsunterlagen offenbarten Merkmale werden als erfindungswesentlich beansprucht, sofern sie einzeln oder in Kombination in den unabhängigen Ansprüchen 1 oder 7 definiert werden.

### Bezugszeichenliste

- 1: Vorrichtung
- 2: Anlage
- 3: erster Anlagenabschnitt
- 4: zweiter Anlagenabschnitt
- 5: dritter Anlagenabschnitt
- 6: Sensoreinheit
- 7: Vergleichswert
- 8: Zeitpunkt T
- 9: Ermittlungseinheit
- 10: Bestimmungseinheit
- 11: supervised-learning-Modul
- 12: Speicherelement
- mᵢ, nᵢ, kᵢ: Anlagenabschnittselemente

## Patentansprüche

1. Vorrichtung (1) zum Ermitteln eines Stillstandverursachers einer Anlage (2), insbesondere einer Abfüllanlage, wobei die Anlage (2) mindestens einen wertschöpfenden ersten Anlagenabschnitt (3), mindestens einen dem ersten Anlagenabschnitt (3) vorgeschalteten zweiten Anlagenabschnitt (4) und mindestens einen dem ersten Anlagenabschnitt nachgeschalteten dritten Anlagenabschnitt (5) aufweist, wobei für jeden Anlagenabschnitt (3, 4, 5) durch eine Sensoreinheit (6) der Vorrichtung (1), ausgehend von einem zu dem jeweiligen Anlagenabschnitt (3, 4, 5) gehörenden Stromsignal, Werte einer aufgenommenen Leistung bestimmbar sind,
eine Vergleichseinheit der Vorrichtung (1) dazu vorgesehen und ausgebildet ist, für jeden Anlagenabschnitt (3, 4, 5) die jeweiligen Werte der aufgenommenen Leistung mit einem jeweiligen bestimmbaren maschinenspezifischen Vergleichswert (7) zu vergleichen, wobei ein Stillstand des jeweiligen Anlagenabschnitts (3, 4, 5) vorliegt, wenn zu einem Zeitpunkt T (8) der Wert der aufgenommenen Leistung kleiner als der Vergleichswert ist,
wobei ausgehend von dem Stillstand des ersten Anlagenabschnitts (3), welcher länger als eine vordefinierbare Zeitdauer andauert, eine Ermittlungseinheit (9) der Vorrichtung (1) dazu vorgesehen und ausgebildet ist, unter Verwendung der Werte der aufgenommenen Leistung der Anlagenabschnitte (3, 4, 5) einen Stillstandverursacher ausgewählt aus den Anlagenabschnitten (3, 4, 5) zu ermitteln, wobei die Ermittlungseinheit (9) dazu vorgesehen und ausgebildet ist, nach der Zeitdauer des Stillstands des ersten Anlagenabschnitts (3) mindestens einen ersten von der Leistungsaufnahme der Anlagenabschnitte (3, 4, 5) abhängigen Wert zu bestimmen und aufgrund einer Höhe des ersten Wertes ein Anlagenabschnitt dem ersten Wert zuzuweisen,
**dadurch gekennzeichnet, dass**
der zweite Anlagenabschnitt (4) n Anlagenabschnittselemente nᵢ mit i=1,...,n' und der dritte Anlagenabschnitt (5) m Anlagenabschnittselemente mᵢ mit i=1,... ,m' aufweisen, wobei das Element n₁ direkt dem ersten Anlagenabschnitt (3) und das Element nᵢ₊₁ direkt dem Element nᵢ vorgelagert ist und das Element m₁ direkt dem ersten Anlagenabschnitt (3) und das Element mᵢ₊₁ direkt dem Element mᵢ nachgelagert ist, wobei nach Zuweisung des zweiten Anlagenabschnittes (4) oder dem dritten Anlagenabschnitts (5) zu dem ersten Wert durch die dazu vorgesehene und ausgebildete Ermittlungseinheit (9) mindestens einen (i+1)-ten, beginnend mit i=1, von der Leistungsaufnahme von dem Anlagenabschnittselementen nᵢ und nᵢ₊₁ des zweiten Anlagenabschnitts (4) oder mᵢ und mᵢ₊₁ des dritten Anlagenabschnitts (5) den Abschnittselementen abhängigen Wert zu bestimmen und unter Berücksichtigung der (i+1)-ten Werte durch die dazu vorgesehene und ausgebildete Ermittlungseinheit (9) den Stillstandverursacher zu ermitteln, wobei die Ermittlungseinheit (9) dazu vorgesehen und ausgebildet ist, bei Ermittlung des Anlagenabschnittelements nᵢ₊₁ einen Vergleich mit dessen direkt vorgelagerten Anlagenabschnittelement nᵢ₊₂ oder bei Ermittlung des Anlagenabschnittelements mᵢ₊₁ ein Vergleich mit dessen direkt nachgelagerten Anlagenabschnittelements _{Mi+2} durchzuführen, und wobei der erste Anlagenabschnitt k zueinander korrelierte Anlagenabschnittselemente kᵢ mit i=1,...,k' mit einem Korrelationswert von mindestens 0,8 aufweist, wobei das Element k₁ direkt dem wertschöpfenden Anlagenabschnittselement k₁ und das Element kᵢ₊₁ direkt dem Element kᵢ vorgelagert ist,
wobei nach Zuweisung des ersten Anlagenabschnittes (3) zu dem ersten Wert in Abhängigkeit durch die dazu vorgesehene und ausgebildete Ermittlungseinheit (9) mindestens einen (i+1)-ter, beginnend mit i=1, von der Leistungsaufnahme von dem Anlagenabschnittselementen kᵢ und kᵢ₊₁ des zugewiesenen Anlagenabschnitts (3, 4, 5) abhängiger Wert zu bestimmen und unter Berücksichtigung der (i+1)-ten Werte durch die dazu vorgesehene und ausgebildete Ermittlungseinheit (9) den Stillstandverursacher zu ermitteln, wobei die Ermittlungseinheit (9) dazu vorgesehen und ausgebildet ist, bei Ermittlung des Anlagenabschnittelements kᵢ₊₁ einen Vergleich mit dessen direkt vorgelagerten Anlagenabschnittelements durchzuführen.

2. Vorrichtung (1) nach Anspruch 1,
**dadurch gekennzeichnet, dass**
die Zeitdauer mindestens eine Minute und höchstens 10 Minuten beträgt.

3. Vorrichtung (1) nach Anspruch 1 oder 2,
**dadurch gekennzeichnet, dass**
eine Bestimmungseinheit (10) der Vorrichtung (1) dazu vorgesehen und ausgebildet ist, den Vergleichswert (7) durch automatisch zu bestimmen durch ein Finden eines lokalen Minimums der Werte der aufgenommenen Leistung in einem störungsfreien Betriebszustand und Setzen dieses Minimums als den Vergleichswert (7).

4. Vorrichtung (1) nach einem der Ansprüche 1 bis 3,
**dadurch gekennzeichnet, dass**
die Ermittlungseinheit (9) ein supervised-learning-Modul (11) aufweist, wobei das supervised-learning-Modul (11) dazu vorgesehen und ausgebildet ist, durch Trainingswerte, welchen ein Anlagenabschnitt (3, 4, 5) zugewiesen ist, eine Gesetzmäßigkeit zur Zuweisung des Anlagenabschnitts (3, 4, 5) zu den ersten Werten zum Erkennen des Stillstandverursachers zu erlernen.

5. Vorrichtung (1) nach einem der vorangegangenen Ansprüche,
**dadurch gekennzeichnet, dass**
die Vorrichtung (1) ein Speicherelement (12) zumindest zum Speichern von Werten der aufgenommenen Leistung aufweist.

6. Anlage,
insbesondere eine Abfüllanlage, wobei die Anlage (2) mindestens einen wertschöpfenden ersten Anlagenabschnitt (3), mindestens einen dem ersten Anlagenabschnitt (3) vorgeschalteten zweiten Anlagenabschnitt (4) und mindestens einen dem ersten Anlagenabschnitt nachgeschalteten dritten Anlagenabschnitt (5) aufweist,
**dadurch gekennzeichnet, dass** die Anlage eine Vorrichtung gemäß einem der Ansprüche 1 bis 5 aufweist.

7. Verfahren zum Ermitteln eines Stillstandverursachers einer Anlage (2), insbesondere einer Abfüllanlage, wobei die Anlage mindestens einen wertschöpfenden ersten Anlagenabschnitt (3), mindestens einen dem ersten Anlagenabschnitt (3) vorgeschalteten zweiten Anlagenabschnitt (4) und mindestens einen dem ersten Anlagenabschnitt (3) nachgeschalteten dritten Anlagenabschnitt (5) aufweist, wobei für jeden Anlagenabschnitt (3, 4, 5) durch eine Sensoreinheit (6) der Vorrichtung (1) ausgehend von einem zu dem jeweiligen Anlagenabschnitt (3, 4, 5) gehörenden Stromsignal Werte einer aufgenommenen Leistung bestimmt werden,
für jeden Anlagenabschnitt (3, 4, 5) die jeweiligen Werte der aufgenommenen Leistung mit einem jeweiligen bestimmbaren maschinenspezifischen Vergleichswert (7) durch eine Vergleichseinheit der Vorrichtung (2) verglichen werden und ein Stillstand des jeweiligen Anlagenabschnitts (3, 4, 5) vorliegt, wenn zu einem Zeitpunkt T der Wert der aufgenommenen Leistung kleiner als der Vergleichswert (7) ist,
wobei ausgehend von einem Stillstand des ersten Anlagenabschnitts (3), welcher länger als eine vordefinierbare Zeitdauer andauert, unter Verwendung der Werte der aufgenommenen Leistung der Anlagenabschnitte (3, 4, 5) ein Stillstandverursacher ausgewählt aus den Anlagenabschnitten (3, 4, 5) durch eine Ermittlungseinheit (9) der Vorrichtung (1) ermittelt wird, wobei
die Ermittlungseinheit (9) nach der Zeitdauer des Stillstands des ersten Anlagenabschnitts (3) mindestens einen ersten von der Leistungsaufnahme der Anlagenabschnitte (3, 4, 5) abhängigen Wert bestimmt und aufgrund einer Höhe des ersten Wertes ein Anlagenabschnitt dem ersten Wert zuweist,
**dadurch gekennzeichnet, dass**
der zweite Anlagenabschnitt (4) n Anlagenabschnittselemente nᵢ mit i=1,...,n' und der dritte Anlagenabschnitt (5) m Anlagenabschnittselemente mᵢ mit i=1,... ,m' aufweisen, wobei das Element n₁ direkt dem ersten Anlagenabschnitt (3) und das Element nᵢ₊₁ direkt dem Element nᵢ vorgelagert ist und das Element m₁ direkt dem ersten Anlagenabschnitt (3) und das Element mᵢ₊₁ direkt dem Element mᵢ nachgelagert ist, wobei nach Zuweisung des zweiten Anlagenabschnittes (4) oder dem dritten Anlagenabschnitts (5) zu dem ersten Wert durch die dazu vorgesehene und ausgebildete Ermittlungseinheit (9) mindestens einen (i+1)-ten, beginnend mit i=1, von der Leistungsaufnahme von dem Anlagenabschnittselementen nᵢ und nᵢ₊₁ des zweiten Anlagenabschnitts (4) oder mᵢ und mᵢ₊₁ des dritten Anlagenabschnitts (5) den Abschnittselementen abhängigen Wert bestimmt wird und unter Berücksichtigung der (i+1)-ten Werte durch die Ermittlungseinheit (9) den Stillstandverursacher zu ermitteln, wobei bei Ermittlung des Anlagenabschnittelements nᵢ₊₁ einen Vergleich mit dessen direkt vorgelagerten Anlagenabschnittelement nᵢ₊₂ oder bei Ermittlung des Anlagenabschnittelements mᵢ₊₁ ein Vergleich mit dessen direkt nachgelagerten Anlagenabschnittelements mᵢ₊₂ durchgeführt wird,
und wobei der erste Anlagenabschnitt k zueinander korrelierte Anlagenabschnittselemente kᵢ mit i=1,... ,k' mit einem Korrelationswert von mindestens 0,8 aufweist, wobei das Element k₁ direkt dem wertschöpfenden Anlagenabschnittselement k₁ und das Element kᵢ₊₁ direkt dem Element kᵢ vorgelagert ist,
wobei nach Zuweisung des ersten Anlagenabschnittes (3) zu dem ersten Wert in Abhängigkeit durch die dazu vorgesehene und ausgebildete Ermittlungseinheit (9) mindestens einen (i+1)-ter, beginnend mit i=1, von der Leistungsaufnahme von dem Anlagenabschnittselementen kᵢ und kᵢ₊₁ des zugewiesenen Anlagenabschnitts (3, 4, 5) abhängiger Wert bestimmt wird und unter Berücksichtigung der (i+1)-ten Werte der Stillstandverursacher ermittelt wird, wobei bei Ermittlung des Anlagenabschnittelements kᵢ₊₁ ein Vergleich mit dessen direkt vorgelagerten Anlagenabschnittelements durchgeführt wird.

8. Verfahren nach Anspruch 7,
**dadurch gekennzeichnet, dass**
die Zeitdauer des Stillstands des ersten Anlagenabschnitts (3) mindestens eine Minute und höchstens 10 Minuten beträgt.

## Claims

1. Device (1) for identifying the cause of a standstill in a plant (2), in particular a filling plant, the plant (2) having at least one value-adding first plant portion (3), at least one second plant portion (4) upstream of the first plant portion (3) and at least one third plant portion (5) downstream of the first plant portion, it being possible to determine values of a consumed power for each plant portion (3, 4, 5) by means of a sensor unit (6) of the device (1), on the basis of a current signal belonging to the relevant plant portion (3, 4, 5), a comparison unit of the device (1) being provided and designed to compare the values of the power consumed with a relevant determinable machine-specific comparison value (7) for each plant portion (3, 4, 5), the relevant plant portion (3, 4, 5) being at a standstill if the value of the power consumed is less than the comparison value at a point in time T (8), on the basis of the standstill of the first plant portion (3), which lasts longer than a predefinable period of time, an identification unit (9) of the device (1) being provided and designed to identify, using the values of the power consumed by the plant portions (3, 4, 5), which of the plant portions (3, 4, 5) has caused a standstill, the identification unit (9) being provided and designed to determine at least one first value dependent on the power consumption of the plant portions (3, 4, 5) after the period of standstill of the first plant portion (3) and, based on a level of the first value, to assign the first value to a plant portion,
**characterized in that**
the second plant portion (4) has n plant portion elements nᵢ where i = 1, ..., n', and the third plant portion (5) has m plant portion elements mᵢ where i = 1, ..., m', the element n₁ being directly upstream of the first plant portion (3) and the element n₁₊ᵢ being directly upstream of the element nᵢ and the element m₁ being directly downstream of the first plant portion (3) and the element mᵢ₊₁ being directly downstream of the element mᵢ, after the second plant portion (4) or the third plant portion (5) has been assigned to the first value by means of the identification unit (9) provided and designed for this purpose, to determine at least one (i+1)th value, starting with i = 1, dependent on the portion elements, of the power consumption of the plant portion elements nᵢ and nᵢ₊₁ of the second plant portion (4) or mᵢ and mᵢ₊₁ of the third plant portion (5) and, taking into account the (i+1)th values, to identify the cause of the standstill by means of the identification unit (9) provided and designed for this purpose, the identification unit (9) being provided and designed, when the plant portion element nᵢ₊₁ is identified, to carry out a comparison with the directly upstream plant portion element nᵢ₊₂ thereof or, when the plant portion element mᵢ₊₁ is identified, to carry out a comparison with the directly downstream plant portion element mᵢ₊₂ thereof, and the first plant portion k having plant portion elements kᵢ correlated to one another where i = 1, ..., k' with a correlation value of at least 0.8, element k₁ being directly upstream of the value-adding contact portion element k₁ and element kᵢ₊₁ being directly upstream of element kᵢ, after the first plant portion (3) has been assigned to the first value depending on the identification unit (9) provided and designed for this purpose, to determine at least one (i+1)th value, starting with i = 1, dependent on the portion elements, of the power consumption of the plant portion elements kᵢ and kᵢ₊₁ of the assigned plant portion (3, 4, 5) and, taking into account the (i+1)th values, to identify the cause of the standstill by means of the identification unit (9) provided and designed for this purpose, the identification unit (9) being provided and designed, when the plant portion element kᵢ₊₁ is identified, to carry out a comparison with the directly upstream plant portion element thereof.

2. Device (1) according to claim 1,
**characterised in that**
the duration is at least one minute and at most 10 minutes.

3. Device (1) according to either claim 1 or claim 2,
**characterised in that**
a determination unit (10) of the device (1) is provided and designed to automatically determine the comparison value (7) by finding a local minimum of the values of the power consumed in a trouble-free operating state and setting this minimum as the comparison value (7).

4. Device (1) according to any of claims 1 to 3,
**characterised in that**
the identification unit (9) has a supervised learning module (11), the supervised learning module (11) being provided and designed, by means of training values to which a plant portion (3, 4, 5) is assigned, to learn a regularity for assigning the plant portion (3, 4, 5) to the first values in order to identify the cause of the standstill.

5. Device (1) according to any of the preceding claims,
**characterised in that**
the device (1) has a memory element (12) at least for storing values of the power consumed.

6. Plant, in particular a filling plant, the plant (2) having at least one value-adding first plant portion (3), at least one second plant portion (4) upstream of the first plant portion (3) and at least one third plant portion (5) downstream of the first plant portion,
**characterised in that**
the plant comprises a device according to any of claims 1 to 5.

7. Method for identifying the cause of a standstill in a plant (2), in particular a filling plant, the plant having at least one value-adding first plant portion (3), at least one second plant portion (4) upstream of the first plant portion (3) and at least one third plant portion (5) downstream of the first plant portion (3), values of a consumed power being determined for each plant portion (3, 4, 5) by means of a sensor unit (6) of the device (1), on the basis of a current signal belonging to the relevant plant portion (3, 4, 5), the values of the power consumed being compared with a relevant determinable machine-specific comparison value (7) by means of a comparison unit of the device (2) for each plant portion (3, 4, 5), and the relevant plant portion (3, 4, 5) being at a standstill if the value of the power consumed is less than the comparison value (7) at a point in time T, on the basis of the standstill of the first plant portion (3), which lasts longer than a predefinable period of time, an identification unit (9) of the device (1) identifies, using the values of the power consumed by the plant portions (3, 4, 5), which of the plant portions (3, 4, 5) has caused a standstill, the identification unit (9) determining at least one first value dependent on the power consumption of the plant portions (3, 4, 5) after the period of standstill of the first plant portion (3) and, based on a level of the first value, assigning the first value to a plant portion,
**characterized in that**
the second plant portion (4) has n plant portion elements nᵢ where i = 1, ..., n', and the third plant portion (5) has m plant portion elements mᵢ where i = 1, ..., m', the element n₁ being directly upstream of the first plant portion (3) and the element nᵢ₊₁ being directly upstream of the element nᵢ and the element m₁ being directly downstream of the first plant portion (3) and the element mᵢ₊₁ being directly downstream of the element mᵢ, after the second plant portion (4) or the third plant portion (5) has been assigned to the first value by the identification unit (9) provided and designed for this purpose, at least one (i+1)th value, starting with i = 1, dependent on the portion elements, of the power consumption of the plant portion elements nᵢ and nᵢ₊₁ of the second plant portion (4) or mᵢ and mᵢ₊₁ of the third plant portion (5) being determined and, taking into account the (i+1)th values, to identify the cause of the standstill by means of the identification unit (9) provided and designed for this purpose, a comparison with the directly upstream plant portion element nᵢ₊₂ of the plant portion element nᵢ₊₁ being carried out when said plant portion element is identified, or a comparison with the directly downstream plant portion element mᵢ₊₂ of the plant portion element mᵢ₊₁ being carried out when said plant portion element is identified, and the first plant portion k having plant portion elements kᵢ correlated to one another where i = 1, ..., k' with a correlation value of at least 0.8, element k₁ being directly upstream of the value-adding contact portion element k₁ and element kᵢ₊₁ being directly upstream of element kᵢ, after the first plant portion (3) has been assigned to the first value depending on the identification unit (9) provided and designed for this purpose, at least one (i+1)th value, starting with i = 1, dependent on the power consumption of the plant portion elements kᵢ and kᵢ₊₁ of the assigned plant portion (3, 4, 5), being determined and, taking into account the (i+1)th values, the cause of the standstill being identified, a comparison with the directly upstream plant portion element of the plant portion element kᵢ₊₁ being carried out when said plant portion element is identified.

8. Method according to claim 7,
**characterised in that**
the duration of the standstill of the first plant portion (3) is at least one minute and at most 10 minutes.

## Revendications

1. Dispositif (1) pour identifier la cause d'un arrêt dans une installation (2), en particulier une installation de remplissage, l'installation (2) ayant au moins une première partie d'installation à valeur ajoutée (3), au moins une deuxième partie d'installation (4) en amont de la première partie d'installation (3) et au moins une troisième partie d'installation (5) en aval de la première partie d'installation, des valeurs d'une puissance consommée pour chaque partie d'installation (3, 4, 5) pouvant être déterminées à l'aide d'une unité de détection (6) du dispositif (1), sur la base d'un signal de courant appartenant à la partie d'installation concernée (3, 4, 5), une unité de comparaison du dispositif (1) étant prévue et conçue pour comparer les valeurs de la puissance consommée avec une valeur de comparaison en langage machine déterminable concernée (7) pour chaque partie d'installation (3, 4, 5), la partie d'installation concernée (3, 4, 5) étant à l'arrêt si la valeur de la puissance consommée est inférieure à la valeur de comparaison à un moment dans le temps T (8), sur la base de l'arrêt de la première partie d'installation (3), qui dure plus longtemps qu'une période de temps prédéfinissable, une unité d'identification (9) du dispositif (1) étant prévue et conçue pour identifier, à l'aide des valeurs de la puissance consommée par les parties d'installation (3, 4, 5), laquelle des parties d'installation (3, 4, 5) a provoqué un arrêt, l'unité d'identification (9) étant prévue et conçue pour déterminer au moins une première valeur dépendante de la consommation de puissance des parties d'installation (3, 4, 5) après la période d'arrêt de la première partie d'installation (3) et, sur la base d'un niveau de la première valeur, pour attribuer une première valeur à une partie d'installation,
**caractérisé par le fait que**
la deuxième partie d'installation (4) a n éléments de partie d'installation ni où i = 1, ..., n', et la troisième partie d'installation (5) a m éléments de partie d'installation mᵢ où i = 1, .., m', l'élément n₁ étant directement en amont la première partie d'installation (3) et l'élément nᵢ₊₁ étant directement en amont de l'élément nᵢ et l'élément m₁ étant directement en aval de la première partie d'installation (3) et l'élément mᵢ₊₁ étant directement en aval de l'élément mᵢ, après que la deuxième partie d'installation (4) ou la troisième partie d'installation (5) a été attribuée à la première valeur à l'aide de l'unité d'identification (9) prévue et conçue à cet effet, pour déterminer au moins une (i+1)ème valeur, en partant de i = 1, selon les éléments de partie, de la consommation de puissance des éléments de partie d'installation nᵢ et nᵢ₊₁ de la deuxième partie d'installation (4) ou mᵢ et mᵢ₊₁ de la troisième partie d'installation (5) et, en tenant compte des (i+1)èmes valeurs, pour identifier la cause de l'arrêt à l'aide de l'unité d'identification (9) prévue et conçue à cet effet, l'unité d'identification (9) étant prévue et conçue, lorsque l'élément de partie d'installation nᵢ₊₁ est identifié, pour effectuer une comparaison avec son élément de partie d'installation nᵢ₊₂ directement en amont ou, lorsque l'élément de partie d'installation mᵢ₊₁ est identifié, pour effectuer une comparaison avec son élément de partie d'installation mᵢ₊₂ directement en aval, et la première partie d'installation k ayant des éléments de partie d'installation kᵢ corrélés l'un à l'autre où i = 1, ..., k' avec une valeur de corrélation d'au moins 0,8, l'élément k₁ étant directement en amont de l'élément de partie d'installation à valeur ajoutée k₁ et l'élément kᵢ₊₁ étant directement en amont de l'élément kᵢ, après que la première partie d'installation (3) a été attribuée à la première valeur selon l'unité d'identification (9) prévue et conçue à cet effet, pour déterminer au moins une (i+1)ème valeur, en partant de i = 1, selon les éléments de partie, de la consommation de puissance des éléments de partie d'installation kᵢ et kᵢ₊₁ de la partie d'installation attribuée (3, 4, 5) et, en tenant compte des (i+1)èmes valeurs, pour identifier la cause de l'arrêt à l'aide de l'unité d'identification (9) prévue et conçue à cet effet, l'unité d'identification (9) étant prévue et conçue, lorsque l'élément de partie d'installation kᵢ₊₁ est identifié, pour effectuer une comparaison avec son élément de section d'installation directement en amont.

2. Dispositif (1) selon la revendication 1,
**caractérisé par le fait que**
la durée est d'au moins une minute et d'au plus 10 minutes.

3. Dispositif (1) selon l'une des revendications 1 ou 2,
**caractérisé par le fait que**
une unité de détermination (10) du dispositif (1) est prévue et conçue pour déterminer automatiquement la valeur de comparaison (7) en trouvant un minimum local des valeurs de la puissance consommée dans un état de fonctionnement sans problème et en fixant ce minimum en tant que valeur de comparaison (7).

4. Dispositif (1) selon l'une quelconque des revendications 1 à 3,
**caractérisé par le fait que**
l'unité d'identification (9) a un module d'apprentissage supervisé (11), le module d'apprentissage supervisé (11) étant prévu et conçu, à l'aide de valeurs d'apprentissage auxquelles une partie d'installation (3, 4, 5) est attribuée, pour apprendre une régularité pour attribuer la partie d'installation (3, 4, 5) aux premières valeurs de façon à identifier la cause de l'arrêt.

5. Dispositif (1) selon l'une quelconque des revendications précédentes,
**caractérisé par le fait que**
le dispositif (1) a un élément de mémoire (12) au moins pour stocker des valeurs de la puissance consommée.

6. Installation, en particulier installation de remplissage, l'installation (2) ayant au moins une première partie d'installation à valeur ajoutée (3), au moins une deuxième partie d'installation (4) en amont de la première partie d'installation (3) et au moins une troisième partie d'installation (5) en aval de la première partie d'installation,
**caractérisée par le fait que**
l'installation comprend un dispositif selon l'une quelconque des revendications 1 à 5.

7. Procédé pour identifier la cause d'un arrêt dans une installation (2), en particulier une installation de remplissage, l'installation ayant au moins une première partie d'installation à valeur ajoutée (3), au moins une deuxième partie d'installation (4) en amont de la première partie d'installation (3) et au moins une troisième partie d'installation (5) en aval de la première partie d'installation (3), des valeurs d'une puissance consommée étant déterminées pour chaque partie d'installation (3, 4, 5) à l'aide d'une unité de détection (6) du dispositif (1), sur la base d'un signal de courant appartenant à la partie d'installation concernée (3, 4, 5), les valeurs de la puissance consommée étant comparées à une valeur de comparaison en langage machine déterminable concernée (7) à l'aide d'une unité de comparaison du dispositif (2) pour chaque partie d'installation (3, 4, 5) et la partie d'installation concernée (3, 4, 5) étant à l'arrêt si la valeur de la puissance consommée est inférieure à la valeur de comparaison (7) à un moment dans le temps T, sur la base de l'arrêt de la première partie d'installation (3), qui dure plus longtemps qu'une période de temps prédéfinissable, une unité d'identification (9) du dispositif (1) identifie, à l'aide des valeurs de la puissance consommée par les parties d'installation (3, 4, 5), laquelle des parties d'installation (3, 4, 5) a provoqué un arrêt, l'unité d'identification (9) déterminant au moins une première valeur dépendante de la consommation de puissance des parties d'installation (3, 4, 5) après la période d'arrêt de la première partie d'installation (3) et, sur la base d'un niveau de la première valeur, attribuant la première valeur à une partie d'installation,
**caractérisé par le fait que**
la deuxième partie d'installation (4) a n éléments de partie d'installation nᵢ où i = 1, ..., n' et la troisième partie d'installation (5) a m éléments de partie d'installation mᵢ où i = 1, ..., m', l'élément n₁ étant directement en amont de la première partie d'installation (3) et l'élément nᵢ₊₁ étant directement en amont de l'élément nᵢ et l'élément m₁ étant directement en aval de la première partie d'installation (3) et l'élément mᵢ₊₁ étant directement en aval de l'élément mᵢ, après que la deuxième partie d'installation (4) ou la troisième partie d'installation (5) a été attribuée à la première valeur par l'unité d'identification (9) prévue et conçue à cet effet, au moins une (i+1)ème valeur, en partant de i = 1, selon les éléments de partie, de la consommation de puissance des éléments de partie d'installation ni et nᵢ₊₁ de la deuxième partie d'installation (4) ou mᵢ et mᵢ₊₁ de la troisième partie d'installation (5) étant déterminée et, en tenant compte des (i+1)èmes valeurs, pour identifier la cause de l'arrêt à l'aide de l'unité d'identification (9) prévue et conçue à cet effet, une comparaison avec l'élément de partie d'installation nᵢ₊₂ directement en amont de l'élément de partie d'installation nᵢ₊₁ étant effectuée lorsque ledit élément de partie d'installation est identifié, ou une comparaison avec l'élément de partie d'installation mᵢ₊₂ directement en aval de l'élément de partie d'installation mᵢ₊₁ étant effectuée lorsque ledit élément de partie d'installation est identifié, et la première partie d'installation k ayant kᵢ éléments de partie d'installation corrélés l'un à l'autre où i = 1, ..., k' avec une valeur de corrélation d'au moins 0,8, l'élément k₁ étant directement en amont de l'élément de partie d'installation à valeur ajoutée k₁ et l'élément kᵢ₊₁ étant directement en amont de l'élément kᵢ, après que la première partie d'installation (3) a été attribuée à la première valeur selon l'unité d'identification (9) prévue et conçue à cet effet, au moins une (i+1)ème valeur, en partant de i = 1, selon la consommation de puissance des éléments de partie d'installation kᵢ et kᵢ₊₁ de la partie d'installation attribuée (3, 4, 5), étant déterminée et, en tenant compte des (i+1)èmes valeurs, la cause de l'arrêt étant identifiée, une comparaison avec l'élément de partie d'installation directement en amont de l'élément de partie d'installation kᵢ₊₁ étant effectuée lorsque ledit élément de partie d'installation est identifié.

8. Procédé selon la revendication 7,
**caractérisé par le fait que**
la durée de l'arrêt de la première partie d'installation (3) est d'au moins une minute et d'au plus 10 minutes.
